**Europäisches Patentamt**

**European Patent Office**

**Office européen des brevets**

(19)

(11) Veröffentlichungsnummer: **0 056 927**
**B1**

(12) # EUROPÄISCHE PATENTSCHRIFT

(45) Veröffentlichungstag der Patentschrift:
29.05.85

(51) Int. Cl.⁴: **F 02 G 1/02,** F 02 G 1/04,
F 28 D 7/04, F 28 D 7/10

(21) Anmeldenummer: **81810022.4**

(22) Anmeldetag: **27.01.81**

(54) **Kolbenmaschine.**

(43) Veröffentlichungstag der Anmeldung:
**04.08.82 Patentblatt 82/31**

(45) Bekanntmachung des Hinweises auf die Patenterteilung:
**29.05.85 Patentblatt 85/22**

(84) Benannte Vertragsstaaten:
**CH DE FR GB LI NL SE**

(56) Entgegenhaltungen:
**DE - A - 1 501 585**
**DE - A - 1 801 971**
**DE - A - 2 433 947**
**DE - A - 2 525 911**
**DE - A - 2 826 603**
**DE - A - 2 841 482**
**FR - A - 2 066 543**
**FR - A - 2 084 240**
**US - A - 3 029 596**

(73) Patentinhaber: **FIDES TREUHAND GmbH, Hofaue 95,
D-5600 Wuppertal 1 (DE)**

(72) Erfinder: **Der Erfinder hat auf seine Nennung verzichtet**

(74) Vertreter: **Seehof, Michel et al, c/o AMMANN
PATENTANWAELTE AG BERN Schwarztorstrasse 31,
CH-3001 Bern (CH)**

**Beschreibung**

Die vorliegende Erfindung bezieht sich auf eine Kolbenmaschine mit einem ersten Wärmetauscher, der als Kompressionsraum eines Zylinders ausgebildet ist und einem Zwischenkreislauf mit einem Hilfsmedium und einem zweiten Wärmeaustauscher, wobei der Zwischenkreislauf zwischen dem zweiten Wärmeaustauscher und dem ersten Wärmeaustauscher geschaltet ist.

Eine solche Kolbenmaschine ist in der FR-A-2 084 240 beschrieben, wobei es sich um einen sogenannten Stirling-Motor für Fahrzeuge handelt. Bei diesem Motor wird versucht, die schädlichen Stickoxyde im Abgas zu reduzieren und es wird kein Wert auf die Ausbildung des ersten Wärmeaustauschers, der nur eine Wand ist und auf die wirkungsvollste Übertragung der Wärme von einem Medium auf das andere gelegt. Außerdem werden für den Zwischenkreislauf nur solche Medien verwendet, die mit unterschiedlichen Phasen arbeiten. Schließlich kann die in dieser Schrift angegebene Konstruktion nicht für verschiedene Anwendungen der Kolbenmaschine in Wärme-, Kälte- und Kraftanlagen vorgesehen werden.

Ausgehend von dieser bekannten Kolbenmaschine ist es Aufgabe der vorliegenden Erfindung, die Wärmeübertragung zwischen dem Gas im Kompressionsraum und dem Heizmedium im Brennerraum oder in der Wärmeanlage zu verbessern und damit den Wirkungsgrad und die Leistung einer eingangs erwähnten Kolbenmaschine zu erhöhen und verschiedene Hilfsmedien zu verwenden. Diese Aufgabe wird mit der in den Ansprüchen beschriebenen Kolbenmaschine gelöst.

Die Erfindung wird im folgenden anhand einer Zeichnung von Ausführungsbeispielen näher erläutert werden, wobei es sich um schematische Darstellungen handelt.

Fig. 1 zeigt im Schnitt ein erstes Ausführungsbeispiel eines Wärmeübertragungssystems einer erfindungsgemäßen Kolbenmaschine,

Fig. 2 zeigt einen Schnitt gemäß II-II in Fig. 1,

Fig. 3 zeigt eine Ausschnittsvergrößerung von Fig. 1,

Fig. 4 zeigt eine Variante von Fig. 1,

Fig. 5 zeigt ein zweites Ausführungsbeispiel,

Fig. 6 zeigt den Grundriß es Wärmeaustauschers von Fig. 5,

die Fig. 7 und 8 zeigen Varianten des Beispiels von Fig. 5,

Fig. 9 zeigt ein drittes Ausführungsbeispiel eines Wärmeübertragungssystems,

Fig. 10 zeigt ein viertes Ausführungsbeispiel eines Wärmeübertragungssystems und

Fig. 11 zeigt ein weiteres Ausführungsbeispiel mit einer doppelt wirkenden Wärmepumpe.

Die nachfolgenden Ausführungen werden am Beispiel einer Wärmepumpenanlage dargelegt, wobei es selbstverständlich ist, daß die weiter unten ausgeführten Wärmeübertragungssysteme auch für andere Anlagen mit Heißgaskolbenmaschinen Gültigkeit haben.

Wie in der obenerwähnten Patentanmeldung näher ausgeführt ist, wird im Zylinder der Wärmepumpe die Luft mittels eines Kolbens komprimiert und dadurch erhitzt. Die heiße komprimierte Luft soll im oberen Totpunktbereich Wärme an das Heizmedium, beispielsweise Heizungswasser, Umlauföl, Wärmeluft und dergl. Abgeben. Ein Teil der Kompressionsarbeit wird beim Expansionsvorgang wieder zurückgewonnen. Um einen möglichst hohen Wirkungsgrad der Wärmepumpe zu erreichen ist es notwendig, einen möglichst großen Anteil der erzeugten Wärme an das Heizmedium abzugeben. Um den Wirkungsgrad dieser Wärmeübertragung zu erhöhen, wird vorgeschlagen, einen Zwischenträger einzuschalten, der im folgenden Hilfsmedium genannt wird.

Ganz allgemein gilt die Beziehung $Q = \alpha \times F \times \varDelta t$, wobei Q die übertragene Wärmemenge, $\alpha$ die Wärmeübergangszahl, F die Oberfläche des Wärmeaustauschers und $\varDelta t$ die mittlere Temperaturdifferenz zwischen der komprimierten Luft und dem Heizmedium ist. Wie obenerwähnt, soll Q möglichst groß sein, damit die Leistung der Wärmepumpe je Kolbenhub möglichst groß wird, $\alpha$ soll möglichst groß sein, wobei $\alpha$ vom Material des Wärmeaustauschers und von der Art, Aggregatzustand und Strömungsgeschwindigkeit der Medien abhängig ist, F soll so groß wie möglich sein, während es aus physikalischen und thermodynamischen Überlegungen hervorgeht, daß $\varDelta t$ möglichst klein sein muß, damit der thermodynamische Wirkungsgrad groß wird.

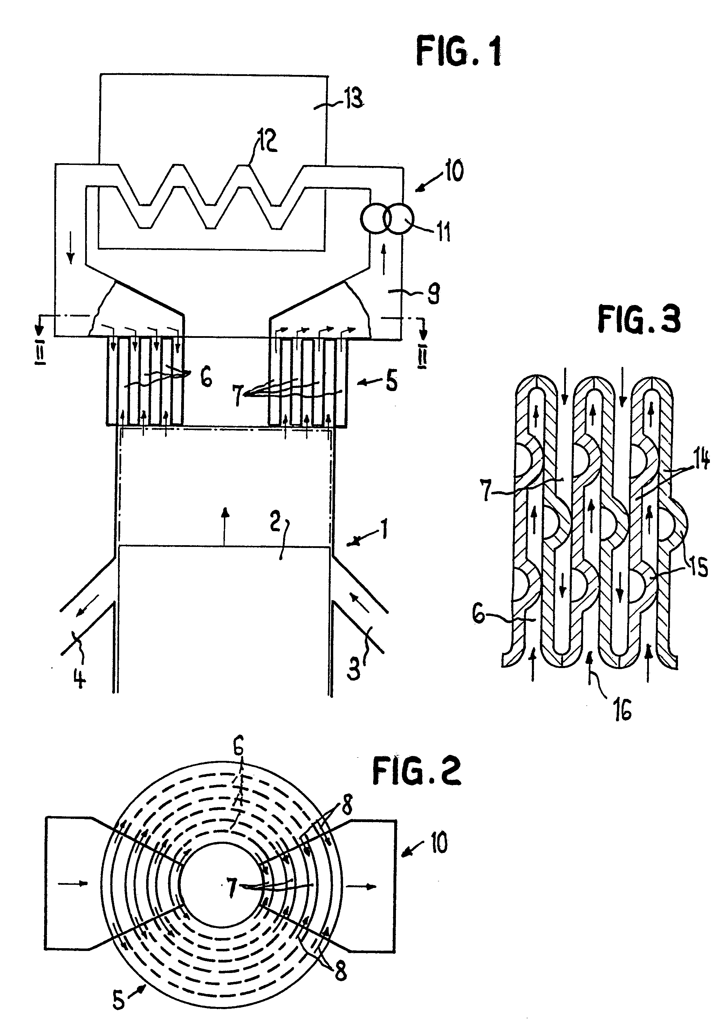

Die Wärmeübertragung vom Kompressionsraum in das Heizmedium, oder umgekehrt, kann nur zu dem Zeitpunkt erfolgen, in welchem sich der Kolben im Bereich der oberen Totpunktlage befindet. Bei einer direkten Wärmeübertragung vom Kompressionsraum in das Heizmedium oder umgekehrt, kann eine Optimierung des Wärmeüberganges nur über die Gestaltung des Kompressionsraumes und dessen Material erfolgen, da in der Regel sowohl das Heizmedium als auch dessen Strömungsgeschwindigkeit vorgegeben sind. Durch die in dieser Anmeldung vorgeschlagenen Zwischenschaltung eines Hilfsmediums ist es nun möglich, die Optimierung des Wärmeüberganges sowohl durch die Ausgestaltung des als erster Wärmeaustauscher dienenden Kompressionsraumes als auch durch die Wahl des Hilfsmediums durchzuführen. Grundsätzlich kann das Hilfsmedium eine Flüssigkeit oder ein Gas ein und mittels Aggregaten wie beispielsweise eine Umlaufpumpe in Zirkulation versetzt werden, wobei das Hilfsmedium im Falle eines Gases komprimiert sein kann. Wird dabei das Hilfsmedium auf einen Druck gebracht, der zwischen dem Umgebungsluftdruck und dem Kompressionsenddruck liegt, wird auf diese Weise das Wärmetauschersystem druckentlastet und zweitens, im Falle daß das Hilfsmedium ein Gas ist, der Wärmeübergang verbessert und Q erhöht. Fall das Hilfsmedium inkompressibel ist, kann zwecks vollständigem Druckausgleich der jeweilige Druck im Zylinder der Heißgaskolbenmaschine dauernd auf das in sich geschlossene System des Hilfsmediums geleitet werden. Dann können sehr dünne Bleche für den Wärmeaustauscher verwendet werden. In den Fig. 1 und 2 ist ein erstes Ausführungsbeispiel eines Wärmeübertragungssystems Kompressionsraum-Heizmedium dargestellt, unter Verwendung eines Hilfsmediums. Man erkennt den Zylinder 1 einer Wärmepumpe mit dem Kolben 2, dem Zylindereinlaß 3 und dem Zylinderauslaß 4 und den als ersten Wärmeaustauscher ausgebildeten Kompressionsraum 5. Der Kompressionsraum 5 besteht aus ringförmigen konzentrischen Kapillarkammern 6 und 7, die oben, bzw. unten verschlossen sind. Es ist selbstverständlich, daß nur solche Hilfsmedien verwendet werden, die den Austauscher nicht angreifen. Wie mit Pfeilen 8 in Fig. 2 angedeutet, tritt links in die oben offenen Ringkammern 7 das Hilfsmedium ein, durchläuft in beiden Richtungen diese Kammern und nimmt dabei dann an der rechten Seite mit entsprechend höherer Temperatur wieder aus. Das Hilfsmedium 9, in vorliegendem Falle ein Gas oder komprimiertes Gas oder eine Flüssigkeit, wird im Zwischenkreislauf 10 durch eine Umwälpumpe 11 in Zirkulation gesetzt und durchläuft einen zweiten Wärmeaustauscher 12, in welchem die Wärme an das Heizmedium 13 abgegeben wird. Die Oberfläche des ersten Wärmetauschers ist sehr groß. Für 1 l Zylinderinhalt kann eine Oberfläche F von 1 bis über 10 m² erreicht werden und dadurch kann auch bei kleinen Werten für $\Delta t$, eine große Wärmemenge Q an das Hilfsmedium bei gutem Wirkungsgrad abgegeben werden.

Wie eingangs erwähnt wurde, können im Falle, daß das Hilfsmedium eine inkompressible Flüssigkeit ist, sehr dünne Bleche für den ersten Wärmeaustauscher verwendet werden. Dabei ist es zweckmäßig, siehe Fig. 3, Blechringe 14 zu verwenden, die örtlich eingeprägte Erhöhungen 15, bzw. Vertiefungen aufweisen, und die sich gegenseitig stützen. Dabei tritt die durch die Pfeile 16 angedeutete Luft aus dem Zylinder der Wärmepumpe von unten ein, während von oben das Hilfsmedium 9 eintreten kann. Dabei können die Blechringe aus Aluminium, Messing, Stahlblech oder dergl. bestehen.

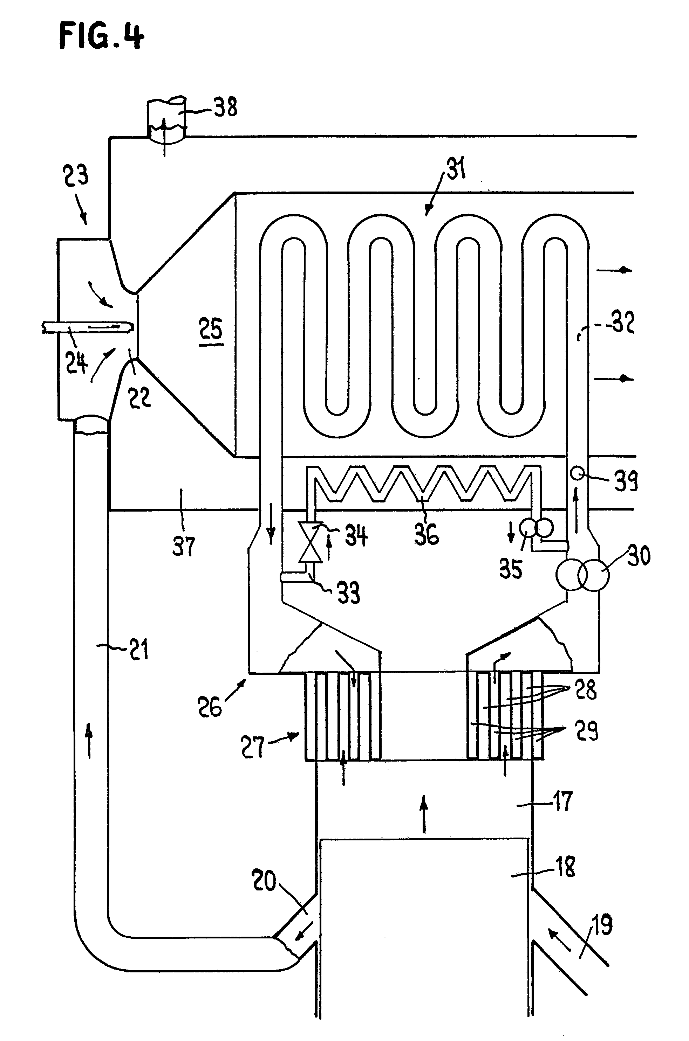

Das Wärmeübertragungssystem gemäß Fig. 4 zeigt, daß für die Wärmeübertragung von einem Ölbrenner an die Zylinder eines Heißgaskolbenmotors im wesentlichen die gleichen Elemente verwendet werden können, wie für die Übertragung der Wärme aus den Zylindern einer Wärmepumpe an ein Heizmedium, wie dies anhand der Fig. 1–3 beschrieben wurde. Man erkennt den Zylinder 17 eines Heißgaskolbenmotors mit dem Kolben 18, dem Zylindereinlaß 19 und dem Zylinderauslaß 20, der über eine Leitung 21 mit dem Einlaß 22 eines Ölbrenners 23 mit Ölzufuhr 24 verbunden ist. Somit wird dem Ölbrenner vorgewärmte Verbrennungsluft zugeführt, was den Wirkungsgrad erhöht. Die Verbindung zwischen dem Brennerraum 25 des Ölbrenners und dem Zylinder 17 des Motors geschieht über einen Zwischenkreislauf 26, der im wesentlichen dem Zwischenkreislauf 10 von Figur 1 entspricht und einen ersten Wärmeaustauscher 27 mit oben, bzw. unten geschlossenen Kapillarkammern 28, bzw. 29, eine Umwälzpumpe und einen zweiten Wärmeaustauscher 31 aufweist. Die von den Zylindern 17 herstammende Abluft weist eine Temperatur von ungefähr 200–500° C auf. Die Brennergasflamme strömt durch den zweiten Wärmeaustauscher 31 und erhitzt das Hilfsmedium 32 so hoch wie möglich. Durch die Umwälzpumpe 30 wird die Wärmemenge Q in den ersten Wärmeaustauscher 27 mit der großen Wärmeaustauschfläche F geleitet. Beim Kompressionsvorgang wird dann die Luft in die angrenzenden Kapillarkammern gedrückt und stark erhitzt. Dadurch ist beim Expansionsvorgang der Druck im Zylinder höher als beim Kompressionsvorgang und es wird positive Arbeitet geleistet, die zur Stromerzeugung, Energieversorgung oder zum Betrieb einer Wärmepumpe benutzt werden kann.

Die Zwischenschaltung des Hilfsmediums hat viele Vorteile.

1.  Das Wärmeaustauschsystem bleibt sauber und kann leicht ausgewechselt werden.
2.  Die Temperatur in dem Wärmeaustauschsystem ist sehr gleichmäßig und auch hoch, wodurch die Leistungsausbeute verbessert wird.
3.  Die Temperaturregelung ist besonders bei Verwendung eines flüssigen Hilfsmediums vereinfacht, wobei unter flüssige Hilfsmedien auch flüssige Metalle, Metallegierungen, Schmelzen und Salze zu verstehen sind.
4.  Eine lokale Überhitzung und dadurch entstehende Beschädigung des Wärmeaustauschers durch die Brennerflammengase ist weitgehend ausgeschlossen, da die Wandungen durch das Hilfsmedium gekühlt werden. Auch wenn das Hilfsmedium eine Temperatur von 1000° C oder höher hat, kann man von Kühlung sprechen, da die Flammengase noch viel heißer sind.
5.  Der Wärmeaustauscher ist druckentlastet, deshalb können die Wärmeaustauschflächen sehr dünn sein, beispielsweise 0,1 mm, wodurch der Wärmeübergang verbessert wird.
6.  Das Material der beiden Wärmeaustauscher kann bis zur obersten Grenze belastet werden, ohne daß Gefahr einer Überbelastung besteht, so daß eine größtmögliche Leistungsausbeute erzielt werden kann.

Wenn die Anlage aus dem kalten Zustand angefahren wird, wobei das flüssige Hilfsmedium auch erstarrt sein kann, kann eine Vorwärmung durch einen elektrischen Widerstandsdraht oder durch eingebaute Rohrleitungen erfolgen, durch die heiße Gase oder Flüssigkeiten geleitet werden, bis das Hilfsmedium anfängt, sich zu verflüssigen.

Wie in Fig. 4 dargestellt ist, kann die Temperatur des Hilfsmediums durch eine Nebenschlußleitung 33 mit entsprechenden Regelventil 34 und Umwälzpumpe 35 so geregelt werden, daß keine unzulässigen Temperaturen entstehen. Diese Nebenschlußleitung wird entweder direkt durch eine Heizschlange 36 im Warmwasserkessel 37 mit Warmwasservorlauf 38 geleitet oder es kann wegen der Gefahr der Dampfbildung bei den hohen Temperaturen in der Nebenschlußleitung ein zweites Hilfsmedium samt Wärmetauscher zur mittelbaren Abgabe der überschüssigen Wärme an das Heizmedium eingeschaltet werden. Die Temperaturen werden mittels eines Temperaturmeßfühlers 39 im Zwischenkreislauf gemessen.

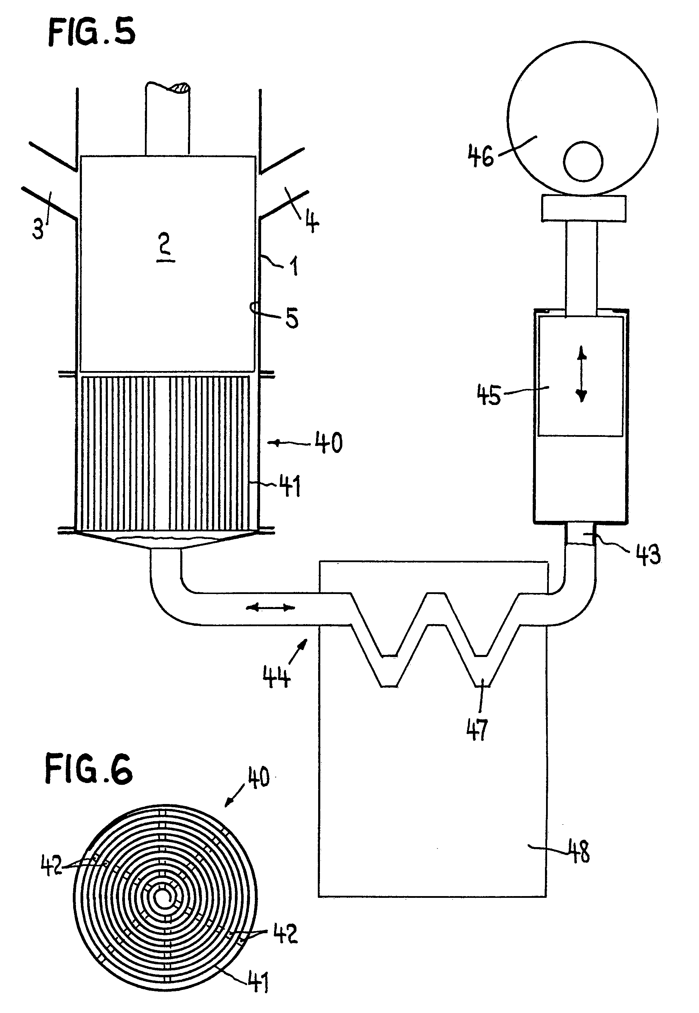

In Fig. 5 ist ein weiteres Beispiel eines Wärmeübertragungssystems bei einer Wärmepumpenanlage dargestellt.

Man erkennt den Zylinder 1 der Wärmepumpe mit dem Kolben 2 und dem Zylindereinlaß 3 sowie den Zylinderauslaß 4 und den Kompressionsraum 5. Der Wärmeaustauscher 40 kann wie derjenige gemäß Fig. 1 oder 3 ausgebildet sein oder wie in vorliegender Fig. 5 aus einem Kapillarsystem aus Metall, beispielsweise aus einem ganz dünnwandigen Blech 41, siehe Fig. 6, welches spiralförmig mit geringem Abstand und wie in vorliegendem Beispiel mit entsprechenden Abstandshaltern 42 aufgewickelt ist. Beim Kompressionsvorgang berührt die komprimierte Luft dieses Kapillarsystem von allen Seiten und erwärmt die Masse dieses Wärmeaustauschers. Die Oberfläche kann jetzt nahezu beliebig groß gemacht werden, wodurch dieser Wärmeaustauscher auch zu kurzfristigen Speicherungen der aufgenommenen Wärmemenge Q dienen kann. Das flüssige Hilfsmedium 43 im Zwischenkreislauf 44 wird von einem Kolben 45 in eine pulsierende Bewegung versetzt, wobei der Kolben 45 durch einen angetriebenen Nocken 46 in Bewegung gesetzt wird. Beim Expansionsvorgang im Bereich des unteren Totpunktes wird das flüssige Hilfsmedium 43 durch den Kolben 45 zwischen die Bleche 41 des Wärmeaustauschers 40 gedrückt. Dieses Hilfsmedium benetzt nun seinerseits fast die ganze Oberfläche des Wärmeaustauschers, die im oberen Totpunkt durch die komprimierte Luft berührt worden ist. Das Hilfsmedium nimmt nun die Wärme aus dem Kapillarsystem ab, d. h. es wird erwärmt und das Kapillarsystem wird entsprechend abgekühlt, wobei das im Bereich des unteren Totpunktes geschieht. Beim Kompressionsvorgang wird Hilfsmedium wieder aus dem Kompressionsraum entfernt. Dann hat die komprimierte und erhitzte Luft im Bereich des oberen Totpunktes ihrerseits wieder Zutritt zu dem Kapillarsystem; sie gibt Wärme an dieses ab. Die Wärmemenge Q wird wieder kurzfristig gespeichert, bis sie wieder von dem Hilfsmedium abgenommen wird. Bei der Hin- und Herbewegung des Hilfsmediums durchströmt dieses einen zweiten Wärmeaustauscher 47, in welchem die Wärmemenge Q von dem Hilfsmedium an das Heizmedium 48 abgegeben wird.

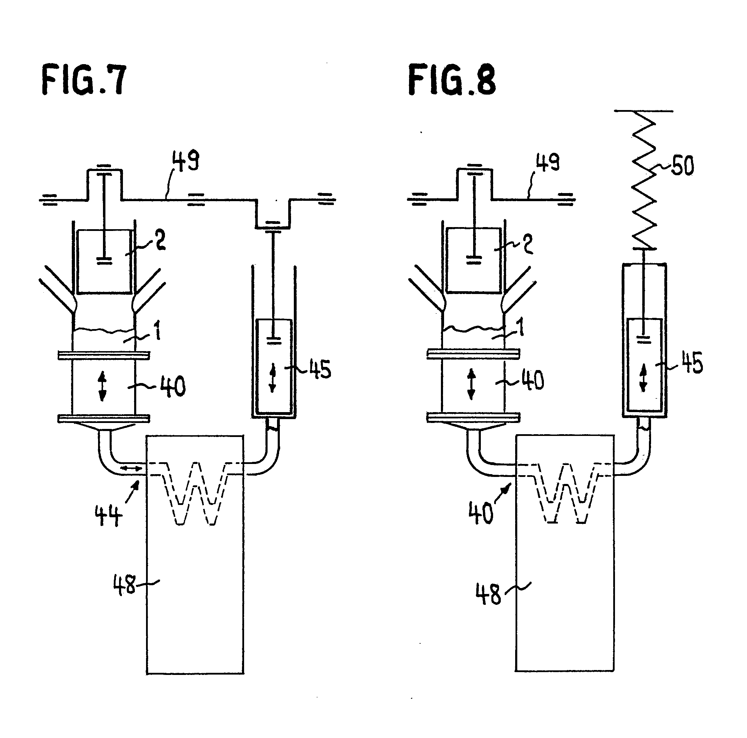

In den Fig. 7 und 8 sind zwei Varianten für den Bewegungsantrieb des Kolbens 45 im Zwischenkreislauf angegeben. Der Kolben 45 zur Bewegung des Hilfsmediums wird von der Kurbelwelle 49 der Wärmepumpe angetrieben, jedoch gegenläufig oder nahezu gegenläufig zur Bewegung des Kolbens der Wärmepumpe.

In Fig. 8 wird der Kolben 45 zur Bewegung des Hilfsmediums durch Federdruck bewegt, wobei der Hub begrenzt ist. Beim Kompressionsvorgang wird das Hilfsmedium durch den Druck der komprimierten Luft gegen den entsprechend eingestellten Federdruck der Feder 50 aus dem Kompressionsraum der Wärmepumpe herausgedrückt und im Bereich des unteren Totpunktes wieder in den Wärmeaustauscher gedrückt. Als Hilfsmedium wird in allen Fällen eine Flüssigkeit gewählt, welche einen genügend hohen verdampfungs- oder Siedepunkt haben und die die Luft und die Bewegung des Kolbens in der Wärmepumpe nicht störend beeinflussen. Die Flüssigkeit soll außerdem das Material des Wärmetauschers nicht oder schlecht benetzen, damit der Wärmeübergang von der komprimierten Luft an den Wärmeaustauscher nicht beeinträchtigt wird und damit bei Verwendung von Metallen, Metallegierungen, Silikonöl und Wasser oder wäßrigen Lösungen bei der Flüssigkeitsbewegung keine großen Kapillarkräfte auftreten.

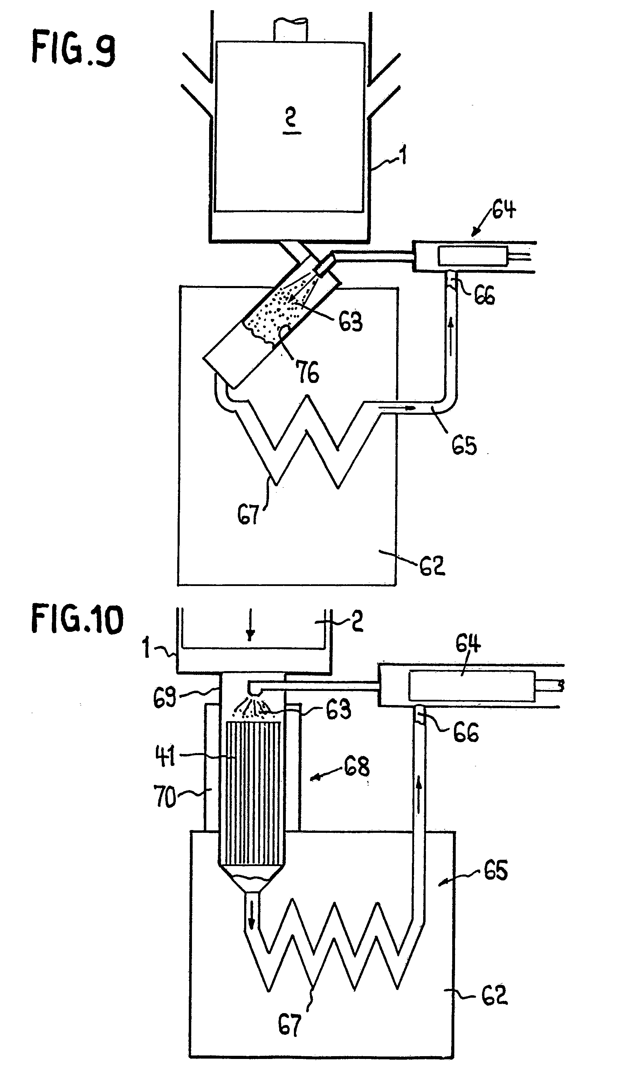

In Fig. 9 ist eine weitere Möglichkeit aufgezeichnet, um Wärme vom Zylinder 1 einer Wärmepumpe an das Heizmedium 62 abzugeben. Die erforderliche große Oberfläche wird in vorliegendem Fall durch einen ganz feinen Nebel, schematisch durch 63 dargestellt, aus kleinen Tröpfchen erzeugt. Dieser Nebel wird dadurch erzeugt, daß zum Zeitpunkt, in dem sich der Kolben 2 im oberen Totpunktbereich befindet, mittels einer Einspritzpumpe 64, ähnlich der eines Dieselmotors, das im Zwischenkreislauf 65 strömende flüssige Hilfsmedium 66 in den Kompressionsraum 76 eingespritzt wird. Die Nebeltröpfchen werden durch die in den Kompressionsraum einströmende erhitzte Luft erwärmt und schlagen sich nach der Wärmeaufnahme an den Wandungen des Kompressionsraumes nieder. Das im Kompressionsraum angesammelte flüssige Hilfsmedium erhitzt dann über einen zweiten Wärmeaustauscher 67 das Heizmedium 62.

Es ist auch möglich, den Kompressionsraum mit Prallblechen von großer Oberfläche auszustatten, an denen sich die Nebeltröpfchen niederschlagen.

Es ist auch möglich, einen ähnlichen Kompressionsraum wie in Fig. 5 zu verwenden, wodurch ebenfalls eine leichte Abscheidung der eingespritzten Hilfsflüssigkeit erzielt werden kann und die für den Wärmeübergang erforderliche Oberfläche noch vergrößert wird. Darüber hinaus dient dieses Kapillarsystem, wie bereits er-

währt, der Wärmespeicherung bis zur Abgabe der Wärme vom flüssigen Hilfsmedium an das Heizmedium über den zweiten Wärmeaustauscher.

Im Ausführungsbeispiel gemäß Fig. 10, bei welchem ebenfalls Flüssigkeit zerstäubt wird, wird der als Wärmeaustauscher 68 dienende Kompressionsraum über einen Kanal 69 mit dem Zylinder 1 der Wärmepumpe verbunden oder er kann gleich am Zylinderdeckel befestigt sein. Durch die hier gezeigte Kombination eines Kapillarsystems 41, 42 wie im Ausführungsbeispiel gemäß Fig. 5 und 6 mit dem Einspritzsystem 63 und 64 gemäß Fig. 9 kann wiederum eine fast unbegrenzt große Oberfläche erzielt werden. Da das Kapillarsystem zudem als Kurzzeitspeicher dient, ist es unerläßlich, dieses Kapillarsystem mit einem Wärmeisoliermantel 70 zu umgeben.

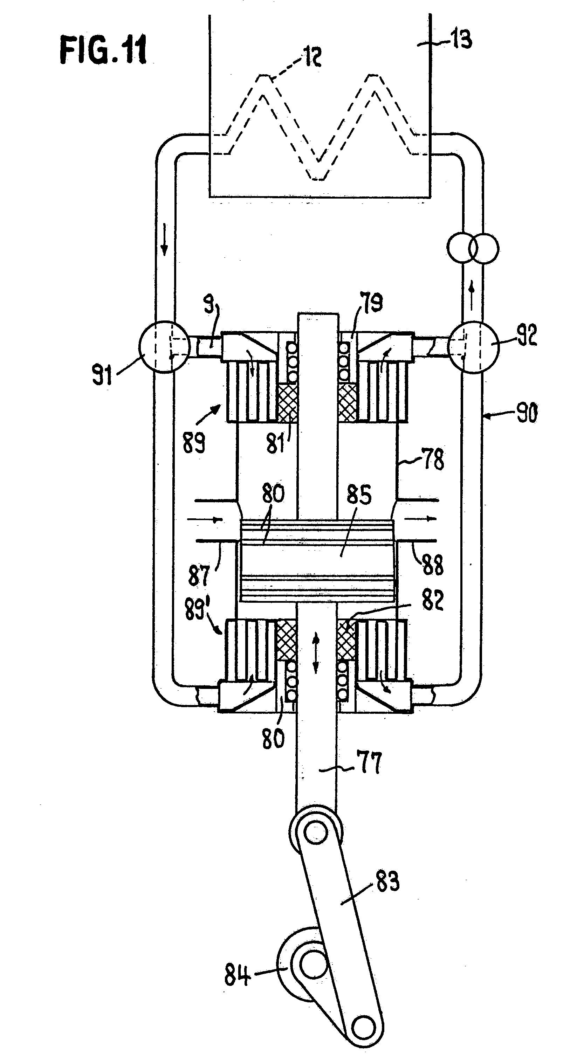

In Fig. 11 ist eine weitere Ausführungsvariante dargestellt, in welcher der Wirkungsgrad der Wärmeübertragung dadurch weiter erhöht wird, daß die Wärmepumpe doppelt wirkend ausgelegt wird. Die durchgehende Kolbenstange 77 ist am oberen und unteren Ende des Zylinders 78 durch Kugellager 79, bzw. 80 geführt. Außerdem ist die Kolbenstange oben und unten durch je eine Labyrinthdichtung 81, bzw. 82 abgedichtet. Die untere Kugellagerführung 80 wirkt als Kreuzkopfführung der Kolbenstange, die über eine Pleuelstange 83 mit der Kurbelwelle 84 des Wärmepumpenantriebs verbunden ist. Der Kolben 85 und die Kolbenstange berühren weder die Zylinderwandung noch die Zylinderdeckel. Die Dichtung des Kolbens wird nicht durch Kolbenringe, sondern durch eine Labyrinthdichtung 86 erzielt. Durch diese Anordnung können die mechanischen Wirkungsgradverluste auf weniger als 10% der notwendigen Antriebsleistung der Wärmepumpe vermindert werden. Man erkennt ferner den Zylindereinlaß 87, sowie den Zylinderauslaß 88. Der erste Wärmeaustauscher ist in einen oberen Teil 89 und unteren Teil 89' aufgeteilt, wobei deren Aufbau der gleiche ist wie derjenige der Ausführungsbeispiele gemäß den Fig. 1 bis 4. Das Hilfsmedium 9 zirkuliert in einem Zwischenkreislauf 90 und nimmt, gesteuert durch die Steuerventile 91 und 92, abwechslungsweise die Wärme vom oberen und unteren ersten Wärmeaustauscher auf und befördert sie zum zweiten Wärmeaustauscher 12, von wo sie in das Heizmedium, d. h. Brauchwasser 13 gelangt.

Selbstverständlich kann der erste, aufgeteilte Wärmeaustauscher auch wie in den anderen Beispielen dargestellt ausgestaltet sein.

## Patentansprüche

1. Kolbenmaschine mit einem ersten Wärmeaustauscher (5), der als Kompressionsraum eines Zylinders (1) ausgebildet ist und einen Zwischenkreislauf (10) mit einem Hilfsmedium (9) und einem zweiten Wärmeaustauscher (12), wobei der Zwischenkreislauf zwischen dem zweiten Wärmeaustauscher und dem ersten Wärmeaustauscher geschaltet ist, dadurch gekennzeichnet, daß der erste Wärmeaustauscher (5, 27, 40, 76, 68, 89, 89') im Kompressionsraum angeordnete, zum Kompressionsraum hin geöffnete und von der Zylinderluft durchströmte Kapillarkammern aufweist und zwischen benachbarten Kapillarkammern weitere, zum Zwischenkreislauf (10, 26, 44, 65, 90) hin offene Kapillarkammern ausgebildet sind, durch die das von einer Pumpe (11, 30, 45, 64) in Bewegung gehaltene Hilfsmedium (9, 32, 43, 66) strömt.

2. Kolbenmaschine nach Anspruch 1, dadurch gekennzeichnet, daß der erste Wärmeaustauscher (5, 27, 89, 89') ringförmige, konzentrische Kapillarkammern (6, 7; 28, 29) aufweist, die vom unten angeordneten Zylinder (1, 17) her gesehen abwechselnd oben, bzw. unten geschlossen sind, wobei die vom Zylinder herstammende Luft in die oben geschlossenen Kapillarkammern (6, 28) strömt und das von einer Umwälzpumpe (11, 30) in Bewegung gehaltene Hilfsmedium (9, 32) durch die unten geschlossenen Kapillarkammern (7, 29) strömt.

3. Kolbenmaschine nach Anspruch 2, dadurch gekennzeichnet, daß die Kapillarkammern aus dünnen Blechringen (14) mit gegenseitig sich stützenden, eingeprägten Erhöhungen (15) bestehen.

4. Verwendung der Kolbenmaschine nach einer der Ansprüche.1 bis 3 als Wärmepumpe, dadurch gekennzeichnet, daß das Hilfsmedium (9, 43, 54, 66) die im ersten Wärmeaustauscher (5, 40, 52, 76, 68, 71, 89, 89') aufgenommene Wärme im zweiten Wärmeaustauscher (12, 47, 55) an das Brauchwasser (13, 48, 56, 62) abgibt.

5. Kolbenmaschine nach einem der Ansprüche 1 bis 3, dadurch gekennzeichnet, daß der zweite Wärmeaustauscher (31) in den Brennerraum (25) eines Ölbrenners (23) hineinragt und der Zylinderauslaß (20) mit dem Einlaß (22) des Ölbrenners verbunden ist.

6. Kolbenmaschine nach Anspruch 5, dadurch gekennzeichnet, daß im Zwischenkreislauf (26) eine Nebenschlußleitung (33) mit Regelventil (34) und Umwälzpumpe (35) angeordnet und durch den Heizkessel (37) geführt ist.

7. Kolbenmaschine nach Anspruch 1 bei Verwendung als Wärmepumpe, dadurch gekennzeichnet, daß der erste Wärmeaustauscher (40) ein spiralförmig aufgewickeltes, dünnwandiges Blech (41) mit Abstandhalter (42) enthält und die Pumpe im Zwischenkreislauf (4) aus einem hin- und hergehenden Kolben (45) besteht, um das Hilfsmedium (43) in eine pulsierende Bewegung zu versetzen.

8. Kolbenmaschine nach Anspruch 7, dadurch gekennzeichnet, daß der Kolben (45) durch einen angetriebenen Nocken (46) in Bewegung gesetzt wird.

9. Kolbenmaschine nach Anspruch 7, dadurch gekennzeichnet, daß der Kolben (45) von der Kurbelwelle (49) der Wärmepumpe, gegenläufig oder nahezu gegenläufig zur Bewegung des Kolbens (2) der Wärmepumpe, angetrieben ist.

10. Kolbenmaschine nach Anspruch 7, dadurch gekennzeichnet, daß der Kolben (45) mit einer Feder (50) zusammenarbeitet, wobei der Kolben beim Kompressionsvorgang die Feder zusammendrückt.

11. Kolbenmaschine nach Anspruch 7, dadurch gekennzeichnet, daß an der Pumpe (4) eine Einspritzdüse angeschlossen ist, um einen Teil des flüssigen Hilfsmediums (66) in den ersten Wärmeaustauscher (76) einzuspritzen.

12. Kolbenmaschine nach Anspruch 1, dadurch gekennzeichnet, daß sie in beiden Richtungen wirkend ist und eine oben und unten durch Kugellager (79, 80) geführt, durchgehende und mittels Labyrinthdichtungen (81, 82) oben und unten abgedichtete Kolbenstange (77) und einen Kolben (85), der mittels einer Labyrinthdichtung gegenüber der Wand des Zylinders (78) abgedichtet ist, sowie einen oberen (89) und unteren (89') ersten Wärmeaustauscher, die mit dem Zwischenkreislauf (90) in Verbindung stehen, aufweisen.

13. Kolbenmaschine nach einem der Ansprüche 1 bis 12, dadurch gekennzeichnet, daß das Hilfsmedium gasförmig ist.

14. Kolbenmaschine nach einem der Ansprüche 1 bis 12, dadurch gekennzeichnet, daß das Hilfsmedium flüssig ist.

15. Kolbenmaschine nach Anspruch 14, dadurch gekennzeichnet, daß das flüssige Hilfsmedium eine wäßrige Lösung oder ein Salz, eine Schmelze oder flüssiges Metall oder eine Metalllegierung ist.

## Claims

1. Piston engine with a first heat exchanger (5) constructed to act as a compression space of a cylinder (1), an intermediate circuit (10) with an auxiliary medium (9) and a second heat exchanger (12), said intermediate circuit being connected between the second and the first heat exchanger, characterized in that the first heat exchanger (5, 27, 40, 76, 68, 89, 89') comprises in the compression space capillary chambers which are open toward the compression space and traversed by the air of the cylinder and between adjacent capillary chambers, further capillary chambers open toward the intermediate circuit (10, 26, 44, 65, 90) and traversed by the auxiliary medium (9, 32, 43, 66) which is circulated by a pump (11, 30, 45, 64).

2. Piston engine according to claim 1, characterized in that the first heat exchanger (5, 27, 89, 89') comprises annular, concentric capillar chambers (6, 7; 28, 29) which viewed from the underneath disposed cylinder (1, 17), are alternatively closed at the top, respectively at the bottom, the air coming out of the cylinder flowing into the capillary chambers closed at the top and the auxiliary medium circulated by a circulation pump flowing through the capillary chambers closed at the bottom.

3. Piston engine according to claim 2, characterized in that the capillary chambers consist of thin rings of metal sheets (4) having impressed bosses (15) and reciprocally supporting each other.

4. Utilization of the piston engine according to one of the claims 1 to 3 as a heat pump, characterized in that the heat received by the axiliary medium (9, 43, 54, 66) in the first heat exchahger (5, 40, 52, 76, 68, 71, 89, 89') is delivered within the second heat exchanger (12, 47, 55) to water for industrial use (13, 48, 56, 62).

5. Piston engine according to one of the claims 1 to 3, characterized in that the second heat exchanger (31) protrudes within the burning space (25) of an oil burner (23), the outlet (20) of the cylinder being connected with the inlet (22) of the oil burner.

6. Piston engine according to claim 5, characterized in that shunting pipe (33) with a control valve (34) and a circulation pump (35) is provided in the intermediate circuit (26), said shunting pipe passing through the furnace (37).

7. Piston engine according to claim 1 in an utilization as a heat pump, characterized in that the first heat exchanger (40) comprises a spirally rolled thin-walled metal sheet (41) with spacers (42), the pump in the intermediate circuit (4) comprising a backward and forward moving piston (45) for imparting to the auxiliary medium (43) a pulsatory motion.

8. Piston engine according to claim 7, characterized in that the piston (45) is moved by a driving cam (46).

9. Piston engine according to claim 7, characterized in that the piston (45) is driven by the crankshaft (49) of the heat pump in opposite or nearly opposite direction with respect to the motion of the piston (2) of the heat pump.

10. Piston engine according to claim 7, characterized in that the piston (45) cooperates with a spring (50), the piston compressing the spring during the compression stroke.

11. Piston engine according to claim 7, characterized in that an injection nozzle is connected to the pump (4) for injecting a part of the liquid auxiliary medium in the first heat exchanger (76).

12. Piston engine according to claim 1, characterized in that it operates in both directions and comprises a through passing piston rod (77) which is guided above and below by ball bearings (79, 80) and stuffed above and below by labyrinth boxes (81, 82), a piston (85) which is stuffed by a labyrinth bow with respect to the wall of the cylinder (78) and an upper (89) and a lower (89') first heat exchanger which are connected with the intermediate circuit 90).

13. Piston engine according to one of the claims 1 to 12, characterized in that the auxiliary medium is gaseous.

14. Piston engine according to one of the claims 1 to 12, characterized in that the axiliary medium is a liquid.

15. Piston engine according to claim 14, characterized in that the liquid auxiliary medium is an aqueous solution or a salt, a molten mass, or a liquid metal or a metallic alloy.

**Revendications**

1. Machine à piston avec un premier échangeur de chaleur (5) formé comme espace de compression d'un cylindre (1) et un circuit intermédiaire (10) avec un milieu auxiliaire (9) et un second échangeur de chaleur (12), le circuit intermédiaire étant connecté entre le second et le premier échangeur de chaleur, caractérisée en ce que le premier échangeur de chaleur (5, 27, 40, 76, 68, 89, 89') comprend dans l'espace de compression des chambres capillaires qui sont ouvertes en direction de l'espace de compression et traversées par l'air du cylindre, et entre des chambres capillaires adjacentes, d'autres chambres capillaires ouvertes en direction du circuit intermédiaire (10, 26, 44, 65, 90) et traversées par le milieu auxiliaire (9, 32, 43, 66) mis en circulation par une pompe (11, 30, 45, 64).

2. Machine à piston selon la revendication 1, caractérisée en ce que le premier échangeur de chaleur (5, 27, 89, 89') comprend des chambres capillaires annulaires concentriques (6, 7; 28, 29) qui, vues du cylindre (1, 17) disposé en dessous, sont alternativement fermées en haut, respectivement en bas, l'air sortant du cylindre s'écoulant dans les chambres capillaires fermées en haut et le milieu auxiliaire mis en circulation par une pompe de circulation s'écoulant à travers les chambres capilaires fermées en bas.

3. Machine à piston selon la revendication 2, caractérisée en ce que les chambres capillaires sont formées d'anneaux minces en tôle (14) avec des bosses (15) sous forme d'empreintes se supportant mutuellement.

4. Utilisation de la machine à piston selon l'une des revendications 1 à 3 comme pompe à chaleur, caractérisée en ce que la chaleur reçue par le milieu auxiliaire (9, 43, 54, 66) dans le premier échangeur de chaleur (5, 40, 52, 76, 68, 71, 89, 89') est délivrée dans le second échangeur de chaleur (12, 47, 55) à de l'eau à usage industriel (13, 48, 56, 62).

5. Machine à piston selon l'une des revendications 1 à 3, caractérisée en ce que le second échangeur de chaleur (31) dépasse à l'intérieur de l'intérieur de l'espace de combustion (25) d'un brûleur à huile (23), la sortie (20) du cylindre étant connectée à l'entrée (22) du brûleur à huile.

6. Machine à piston selon la revendication 5, caractérisée en ce qu'une conduite de dérivation (33) avec une valve de contrôle (34) et une pompe de circulation (35) est prévue dans le circuit intermédiaire (26), la conduite de dérivation passant à travers la fournaise (37).

7. Machine à piston selon la revendication 1 dans une utilisation comme pompe à chaleur, caractérisée en ce que le premier échangeur de chaleur (40) comprend une tôle mince enroulée en spiral (41) avec des éléments de distance (42), la pompe dans le circuit intermédiaire (4) comprenant un piston de va-et-vient (45) pour donner un mouvement pulsatoire au milieu auxiliaire (43).

8. Machine à piston selon la revendication 7, caractérisée en ce que le piston (45) est mû par une came d'entraînement (46).

9. Machine à piston selon la revendication 7, caractérisée en ce que le piston (45) est entraîne par le vilibrequin (49) de la pompe à chaleur dans une direction opposée ou presque opposée à celle du mouvement du piston (2) de la pompe à chaleur.

10. Machine à piston selon la revendication 7, caractérisée en ce que le piston (45) coopère avec un ressort (50), le piston comprimant le ressort pendant la course de compression.

11. Machine à piston selon la revendication 7, caractérisée en ce qu'une buse d'injection est connectée à la pompe (4) pour injecter une partie du milieu auxiliaire liquide dans le premier échangeur de chaleur.

12. Machine à piston selon la revendication 1, caractérisée en ce qu'elle fonctionne dans les deux directions et comprend une tige de piston traversante (77) qui est guidée en haut et en bas par des roulements à billes (79, 80) et rendue étanche en haut et en bas par des bagues à labyrinthe (81, 82), un piston (85) rendu étanche par rapport à la paroi du cylindre (78) par une bague à labyrinthe et un premier échangeur de chaleur supérieur (89) et un premier échangeur de chaleur inférieur (89') connectés au circuit intermédiaire (90).

13. Machine à piston selon l'une des revendication 1 à 12, caractérisée en ce que le milieu auxiliaire est gazeux.

14. Machine à piston selon l'une des revendication 1 à 12, caractérisée en ce que le milieu auxiliaire est liquide.

15. Machine à piston selon la revendication 14, caractérisée en ce que le milieu auxiliaire liquide est une solution aqueuse ou un sel, une masse fondue, ou un métal liquide ou un alliage métallique liquide.

# FIG. 1

# FIG. 3

# FIG. 2

# FIG.4

FIG.5

FIG.6

0 056 927

13

# FIG.7

# FIG.8

**FIG.9**

**FIG.10**

# FIG.11